(19) **Europäisches Patentamt European Patent Office Office européen des brevets**

(11) **EP 2 265 816 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(21) Anmeldenummer: **08801084.8**

(22) Anmeldetag: **28.07.2008**

(51) Int Cl.:
**F03D 9/00** (2006.01)   **H02P 9/00** (2006.01)

(86) Internationale Anmeldenummer:
**PCT/DE2008/001246**

(87) Internationale Veröffentlichungsnummer:
**WO 2009/012776 (29.01.2009 Gazette 2009/05)**

(54) **DOPPELT GESPEISTER ASYNCHRONGENERATOR UND VERFAHREN ZU DESSEN BETRIEB**

DOUBLE-FED ASYNCHRONOUS GENERATOR AND METHOD FOR ITS OPERATION

GÉNÉRATEUR ASYNCHRONE À DOUBLE ALIMENTATION ET PROCÉDÉ POUR LE FAIRE FONCTIONNER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.07.2007 DE 102007035570**

(43) Veröffentlichungstag der Anmeldung:
**29.12.2010 Patentblatt 2010/52**

(73) Patentinhaber: **Universität Kassel 34125 Kassel (DE)**

(72) Erfinder: **HEIER, Siegfried 34225 Baunatal (DE)**

(74) Vertreter: **Dantz, Jan Henning Loesenbeck - Stracke - Specht - Dantz Patentanwälte Rechtsanwälte Am Zwinger 2 33602 Bielefeld (DE)**

(56) Entgegenhaltungen:
**EP-A- 1 790 850       EP-A- 1 914 877
EP-A- 1 919 076       WO-A-02/086314
WO-A-2004/008627**

**Beschreibung**

Die Erfindung betrifft ein Verfahren zum Betreiben eines doppelt gespeisten Asynchrongenerators und einen für diesen Zweck geeigneten Asynchrongenerator nach den Oberbegriffen der Ansprüche 1 und 7, insbesondere zur mechanisch-elektrischen Energiewandlung in Windkraftanlagen.

Ein sicherer Betrieb von Energieversorgungsnetzen setzt außer der Verfügbarkeit der verwendeten Einspeisesysteme auch besondere Schutzmaßnahmen für die im Netz verwendeten, elektrischen Geräte und Vorrichtungen gegenüber Kurzschlüssen voraus. Hierzu sind in der Regel Schutzeinrichtungen in Form von Sicherungen, Schaltern od. dgl. vorgesehen, die im Falle eines Kurzschlusses durch kurzzeitig fließende Kurzschlußströme ausgelöst werden und dadurch die mit ihnen verbundenen Geräte und Vorrichtungen vom Netz abkoppeln. "Kurzzeitig" bedeutet, daß der Kurzschlußstrom zumindest über einen Zeitraum von z. B. 20 ms bis 200 ms vorhanden sein und z. B. den 5- bzw. 15-fachen Betrag des Nennstroms erreichen muß. Werden vorhandene Schutzeinrichtungen nicht ausgelöst, weil ein etwa auftretender Kurzschlußstrom zu kurz oder nicht in ausreichender Höhe auftritt, kann dies mit schwerwiegenden Folgen, insbesondere mit einer Zerstörung der zu schützenden Geräte und Vorrichtungen verbunden sein.

Ein weiteres Problem besteht darin, daß Kurzschlüsse durch das Auftreten von hier als "inhärent" bezeichneten Kurzschlußströmen auch Leitungen und sensible Bauelemente in den Einspeisessystemen selbst zerstören können, wie weiter unten näher erläutert ist.

Im Gegensatz zu anderen Anlagen zur Erzeugung elektrischer Energie wie z. B. Wasser-, Dampf- und Gasturbinen sind Windkraftanlagen sowohl langfristigen, durch die Meteorologie gegebenen, stochastischen Veränderungen als auch kurzfristigen, meist periodischen Schwankungen im Drehmoment und in der Leistungsabgabe unterworfen. Die mechanische Rotationsenergie der Turbine einer Windkraftanlage (z. B. 20 UpM im Megawattbereich) wird daher entweder ohne Zwischenschaltung eines Getriebes mit Generatoren großer Bauform oder unter Zwischenschaltung geeigneter Getriebe (z. B. ca. 1000 UpM) mit handelsüblichen elektrischen Maschinen in elektrische Energie umgewandelt und direkt oder über elektronische Umformer in ein elektrisches Energieversorgungsnetz eingespeist.

Eine Übersicht über übliche, für Windkraftanlagen mehr oder weniger gut geeignete Energiewandlersysteme ist im Buch "Windkraftanlagen" (PD Dr.-Ing. habil. Siegfried Heier, 4. Auflage, B.G. Teubner-Verlag, Stuttgart) gegeben. Danach sind z.B. direkt mit dem Netz gekoppelte Synchrongeneratoren bekannt (S. Heier Seite 119, Bild g). Diese für Kraftwerke übliche Betriebform konnte sich wegen der starken Turbinenschwankungen, des drehzahl-starren Verhaltens, der Schwingungsanfälligkeit und der daraus resultierenden hohen Belastungen des Triebstrangs in Windkraftanlagen bisher nicht durchsetzen und wurde nur für Pilotprojekte eingesetzt.

Windkraftanlagen mit Leistungen bis ca. 1 MW werden bisher überwiegend mit Kurzschlußläufer aufweisenden Asynchrongeneratoren betrieben, die direkt an das Netz gekoppelt sind (S. Heier aao Seite 119, Bild a) und in diesem Energiebereich wegen ihrer Drehzahl-Nachgiebigkeit schwingungsdämpfend wirken. Für Windkraftanlagen mit größeren Leistungen ab ca. 1,5 MW sind derartige Asynchrongeneratoren wegen des kleinen Schlupfs weniger gut geeignet. Für diesen Leistungebereich kommen insbesondere Synchron- und Asynchrongeneratoren in Frage, die zur Entkopplung der Generatorfrequenz von der Netzfrequenz in Verbindung mit Umrichtern betrieben werden. Derartige Umrichter sind mit Gleichrichtern, Gleichstrom-Zwischenkreisen und Wechselrichtern versehen und dadurch in der Lage, Drehstrom variabler Frequenz und Spannung zu liefern und an die Erfordernisse des Netzes anzupassen, um elektrische Energie mit nahezu konstanter Frequenz und Spannung in das Netz einzuspeisen. Außerdem ist es möglich, die von der Windkraftanlage erzeugte Energie ganz (S. Heier aao Seite 119, Bilder b, i, j, h) oder nur teilweise (S. Heier aao Seite 119, Bilder e, f) über den Umrichter zu führen.

Aufgrund neuer gesetzlicher Vorschriften ergeben sich bei Anwendung der beschriebenen Wandlersysteme unerwünschte Schwierigkeiten im Hinblick auf das oben erläuterte Erfordernis einer kurzfristigen Lieferung von Kurzschlußstrom. Generatoren sind aufgrund ihrer großen Eisen- und Kupfermassen, die im Megawattbereich einige Tonnen betragen, zwar ohne weiteres in der Lage, über die genannten Zeiträume von z. B. 100 ms bis 200 ms hinweg einen hohen Kurzschlußstrom zu führen. Handelt es sich jedoch um Generatoren mit Umrichtern, dann konzentriert sich bei den Umrichtern die Energiewandlung bei gleicher Leistung auf sehr kleine, die Umrichter bildenden Halbleiterplatten, die insgesamt nur einige Gramm wiegen. Sie würden bei der Führung von inhärenten Kurzschlußströmen aufgrund starker Erhitzung in den genannten Zeiträumen zerstört. Daher ergibt sich hier ein Zwiespalt zwischen dem an sich erwünschten Kurzschlußstrom und dem Schutz der Umrichter und anderer Teile der Steuer- und Regeleinrichtungen einer Windkraftanlage vor diesem Kurzschlußstrom.

Daraus resultieren folgende Einschränkungen hinsichtlich der Anwendung der verschiedenen Wandlersysteme:

Werden Synchrongeneratoren angewendet, die direkt an das Netz gekoppelt sind (S. Heier aao Seite 119, Bild g), dann ergeben sich hinsichtlich der Lieferung von Kurzschlußströmen keine Schwierigkeiten, d. h. es können aufgrund der Generatorbauweise ohne weiteres Kurzschlußströme durch den direkt mit dem Netz verbundenen Stator fließen, so daß im Netz vorhandene Schutzeinrichtungen sicher ausgelöst werden. Da derartige, wegen ihrer sonstigen Eigenschaften an sich idealen und prinzipiell auch für Windkraftanlagen geeigneten Wandlersysteme jedoch, wie oben bereits erwähnt wurde, über mehrstufige Getriebeübersetzungen oder bei direkter mechanischer Kopplung mit vielpoligen Generatoren betrieben werden müssen, sind sie anfällig gegenüber Schwingungen und werden daher in Windkraftanlagen nicht eingesetzt.

Synchron- und Asynchrongeneratoren mit Umrichtern, über welche der gesamte Strom bzw. die volle elektrische Energie dem Netz zugeführt wird, sind nicht dazu geeignet, Kurzschlußströmen zu führen, da diese die empfindlichen Teile der Wandlersysteme sofort zerstören würden. Es ist daher bekannt, derartige Wandlersysteme mit Mitteln zu versehen, die den Strom beim Anwachsen auf kritische Werte von z. B. 10 % bis 20 % über dem Nennstrom begrenzen. Dadurch wird der Vorteil erzielt, daß die Umrichter vor Überlastungen geschützt werden. Allerdings ergibt sich auch der Nachteil, daß kein Kurzschlußstrom für eine ausreichende Zeitlang in das Netz geliefert werden kann, da die den Strom begrenzenden Mittel, damit sie wirksam sind, eine Strombegrenzung im Mikrosekundenbereich vornehmen müssen.

Schließlich können Wandlersysteme mit doppelt gespeisten, Schleifring-Rotoren statt Kurzschlußläufer aufweisenden Asynchrongeneratoren (S. Heier aao Seite 119, Bilder e, f) im Hinblick auf die Lieferung von Kurzschlußströmen als eine vorteilhafte Kombination der oben beschriebenen Wandlersysteme betrachtet und mit Vorteil auch in Windkraftanlagen mit hoher Leistung oberhalb von 1 MW eingesetzt werden. Da der Stator des Generators direkt mit dem Netz verbunden ist, kann er im Prinzip ohne weiteres zur Lieferung von Kurzschlußströmen herangezogen werden. Ein Problem stellt jedoch auch hier der Umstand dar, daß der Läufer über Umrichter am Netz liegt, die nicht in der Lage sind, Kurzschlußströme zu führen, und daher vor diesen geschützt werden müssen. Zum Schutz derartiger Asynchrongeneratoren ist es bekannt (DE 101 19 624 A1), diese mit einer Schalteinrichtung zu versehen, die ein zur Erkennung von Kurzschlußströmen eingerichtetes Mittel aufweist und so ausgebildet ist, dass sie bei Erkennung eines Kurzschlußstromes einerseits einen maschinenseitigen Umrichter vom Läufer trennt, andererseits den Läufer mit einem Zusatzwiderstand verbindet. Dadurch wird der Läuferstrom begrenzt und abgebaut und der Statorstrom zum Abklingen gebracht. Der Generator ist dann nicht mehr regelbar. Dadurch wird zwar der gesamte Umrichter vor Kurzschlußstrom geschützt. Da der Schaltvorgang aber auch hier so frühzeitig bzw. so schnell durchgeführt wird, dass kein ausreichend langer Kurzschlußstrom mehr geliefert werden kann, können etwaige Schutzeinrichtungen im Netz nicht sicher ausgelöst werden.

Dadurch, daß bei Anwendung der beschriebenen Systeme kein Kurzschlußstrom in das Netz geliefert wird, besteht nicht nur die Gefahr, daß dort vorhandene Schutzeinrichtungen nicht ausgelöst werden. Würde nämlich auch weiterhin ein zwar reduzierter, aber z. B. 10 % oder 20 % über dem Nennstrom liegender Strom in das Netz geliefert, wie dies für einige der oben beschriebenen Systeme gilt, dann kann Fall eintreten, daß eine eigentlich zu schützende Vorrichtung, die zu Beginn des Kurzschlusses zwar beschädigt, aber nicht zerstört wurde, aufgrund des weiterhin fließenden Stroms aber beschädigt wird. Das kann zu schwerwiegenden Folgen wie z. B. Kabelbränden führen und widerspricht den gestellten Sicherheitsanforderungen.

Angesichts des oben erläuterten Standes der Technik besteht daher ein Bedarf an Wandlersystemen, die im Falle eines Kurzschlusses einerseits einen ausreichend hohen und zeitlich ausreichend langen Kurzschlußstrom in das Netz abgeben, andererseits aber dennoch die eigenen Bauelemente vor inhärenten Kurzschlußströmen schützen.

Da mit Synchrongeneratoren betriebene Wandlersysteme den Nachteil haben, daß sie nicht in der Lage sind, Kurzschlussströme zu führen, sieht die vorliegende Erfindung vor, einen mit Umrichtern arbeitenden, doppelt gespeisten Asynchrongenerator für die genannten Zwecke geeignet zu machen.

Ausgehend von dem eingangs genannten Verfahren und dem doppelt gespeisten Asynchrongenerator liegt der Erfindung das technische Problem zugrunde, beide derart zu gestalten, daß der Asynchrongenerator den gewünschten Kurzschlußstrom liefern kann, ohne dass die Gefahr besteht, dass zu seinem Betrieb benötigte Bauelemente durch das Auftreten von inhärenten Kurzschlußströmen zerstört werden.

Gelöst wird dieses Problem erfindungsgemäß durch die kennzeichnenden Merkmale der Ansprüche 1 und 7.

Die Erfindung geht von der Erkenntnis aus, daß doppelt gespeiste Asynchrongeneratoren statorseitig direkt mit dem Netz gekoppelt und daher prinzipiell in der Lage sind, Kurzschlußleistung bereit zu stellen. Dazu muß aber das magnetische Feld des Rotors in seiner momentanen Größe und Winkellage zum Statorfeld, d. h. feldorientiert und unter Berücksichtigung der Formel

$$\omega 2/p2 = \omega 1/p1 - \omega mech$$

aufrecht erhalten werden, worin $\omega 1$ die Winkelgeschwindigkeit des Statordrehfeldes, $\omega 2$ die elektrische Winkelgeschwindigkeit des Rotorfeldes, $\omega mech$ die mechanische Winkelgeschwindigkeit des Rotors, p1 die Stator-Poolpaarzahl und p2 die Rotor-Polpaarzahl sind. Erfindungsgemäß wird dies dadurch erreicht, daß die Generatorerregung aufrecht erhalten wird und sich daher transiente Stator-Kurzschlußströme aufbauen können.

Die Erfindung bringt dadurch mit anderen Worten den Vorteil mit sich, daß beim Auftreten eines Kurzschlusses nicht wie bisher der magnetische Fluß im Läufer des Generators durch Abschalten eines Umrichters völlig unterbrochen, sondern der aktuell vorhandene Betriebswert durch einen gezielten Regeleingriff eingefroren, d. h. beibehalten wird. Der Regeleingriff kann wie bei den bekannten Schalteinrichtungen sehr schnell erfolgen, so daß empfindliche Teile des Synchrongenerators geschützt werden, während gleichzeitig analog zu einem direkt an das Netz gekoppelten Synchrongenerator ein durch die Generatorkonstruktion vorgegebener Kurzschlußstrom in der Statorwicklung ausgebildet und in das Netz eingespeist werden kann. Mit besonderem Vorteil ist es außerdem möglich, die inhärenten Kurzschlußströme durch die Einführung von Korrekturwerten zu erhöhen bzw. abzusenken, und sie dadurch z. B. an spezifische Anforderungen des Netzes anzupassen. Der erfindungsgemäße Asynchrongenerator kann daher vor allem auch nutzbringend in Windkraftanlagen und hier insbesondere im Offshore-Bereich angewendet werden.

Weitere vorteilhafte Merkmale der Erfindung ergeben sich aus den Unteransprüchen.

Die Erfindung wird nachfolgend in Verbindung mit den beiliegenden Zeichnungen näher erläutert. Es zeigen:

Fig. 1 einen bekannten jedoch erfindungsgemäß modifizierten, doppelt gespeisten Asynchrongenerator zur Einspeisung elektrischer, z. B. von einer Windkraftanlage erzeugter Energie in ein dreiphasig ausgebildetes Energieversorgungsnetz;

Fig. 2 und 3 in schematischen Teilansichten der Fig. 1 jeweils Mittel zur Modifizierung von Ist- und Sollwerten im Falle eines Kurzschlusses mit vom Gesamtstrom des Generators abgeleiteten Korrekturwerten; und

Fig. 4 und 5 in schematischen Teilansichten der Fig. 1 jeweils Mittel zur Modifizierung von Ist- und Sollwerten im Falle eines Kurzschlusses mit von der Generatorleistung abgeleiteten Korrekturwerten.

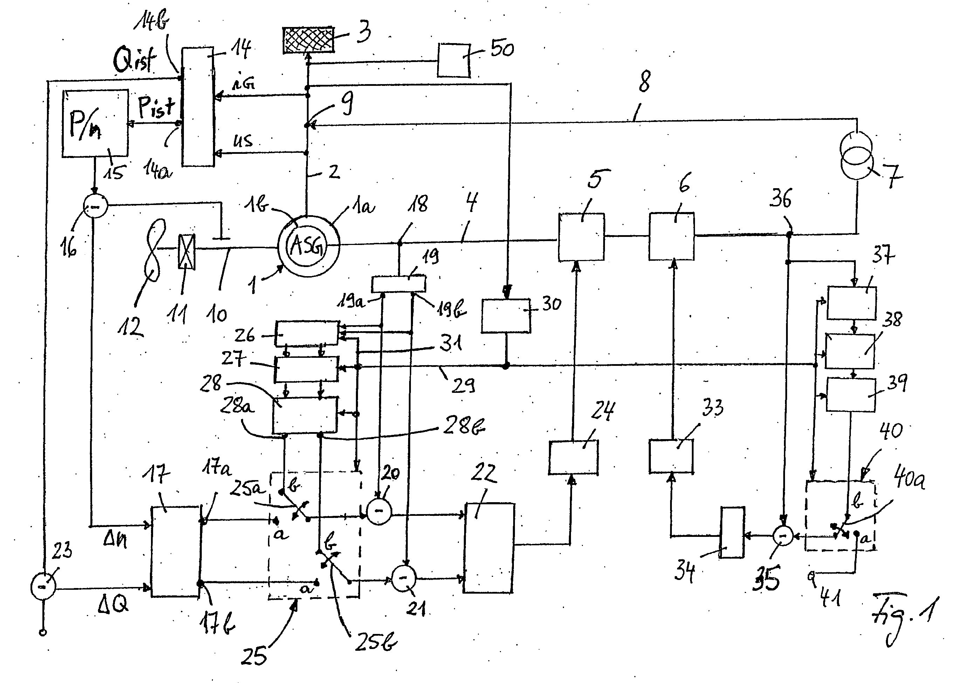

Fig. 1 zeigt schematisch ein in der Drehzahl variables Wandlersystem in Form eines doppelt gespeisten Asynchrongenerators, zu dem hier der Einfachheit halber auch alle Bauelemente und Einrichtungen gezählt werden, die zum Betrieb des eigentlichen, mit dem Bezugszeichen 1 versehenen Generators erforderlich sind. Demzufolge enthält der Asynchrongenerator einen Stator 1a, der über eine. Leitung 2 direkt an ein als dreiphasig vorausgesetztes Energieversorgungsnetz 3 angeschlossen werden kann, und einen Rotor 1b, der über eine Leitung 4 mit einem maschinen- bzw. rotorseitigen Umrichter 5 verbunden ist. Der Umrichter 5 ist mit einem weiteren, netzseitigen Umrichter 6 verbunden, der über einen Transformator 7 und eine Leitung 8 an einem Verbindungspunkt 9 mit der Leitung 2 ebenfalls an das Netz 3 angeschlossen ist.

Der Rotor 1b des Generators 1 ist über eine Welle 10 mit dem Ausgang eines Antriebs fest verbunden, der im Ausführungsbeispiel ein Getriebe 11 und eine Turbine 12 enthält, deren Abtriebswelle mit dem Eingang des Getriebes 11 verbunden ist. Die Turbine 12 ist beispielsweise ein Bestandteil einer üblichen Windkraftanlage. Die Übersetzung des Getriebes 11 ist so gewählt, daß sich der Rotor 1b, wenn die Turbine 12 z. B. mit einer Drehzahl von 10 UpM arbeitet, mit einer Drehzahl von z. B. 1200 UpM dreht, was einer Frequenz von 40 Hz entspricht. Im übrigen ist klar, daß anstelle der Teile 11 und 12 auch andere Antriebe mit dem Rotor 1b verbunden sein könnten.

Fig. 1 zeigt ferner schematisch bekannte, zur Regelung des doppelt gespeisten Asynchrongenerators verwendete Einrichtungen. Diese beinhalten, was nicht näher dargestellt ist, eine Einrichtung zur Transformation der Wirk- und Blindanteile der Gesamtleistung in ein rotierendes 2-Achsen-Koordinatensystem mit d als Längs- und q als Querkomponente, um eine weitgehende Entkoppelung der Wirkleistung und der ihr weitgehend entsprechenden Größe des Maschinendrehmoments auf der einen Seite und der Blindleistung auf der anderen Seite zu erzielen und und beide Größen ohne gegenseitigen Einfluß getrennt regeln zu können. Außerdem wird, um die Vorteile der Variabilität in der Drehzahl nutzen zu können, die Gesamtleistung PG durch die Regelung beeinflußt, indem die Turbinendrehzahl anhand der zugehörigen Leistungs/Drehzahl-Kennlinien vorgegeben wird. Dazu wird die Drehzahl über das Drehmoment beeinflußt, das mit Hilfe des maschinenseitigen Umrichters 5 über die Querkomponente iRMq des Rotorstroms iRM feldorientiert eingestellt wird. Analog dazu kann die Blindleistung z. B. fest vorgegeben oder über die Längskomponente iRMd des Rotorstroms iRM ebenfalls über den Umrichter 5 gesteuert werden.

Nach dem in Fig. 1 dargestellten Ausführungsbeispiel wird für den genannten Zweck an einer in Richtung des Netzes 3 hinter dem Verbindungspunkt 9 liegenden Stelle der Istwert des aus den drei Phasen erhaltenen, dem Netz 3 zugeführten Gesamtstroms iG ermittelt. Dieser Strom iG wird einer Einrichtung 14 zugeführt, in der eine Koordinaten-Transformation aus dem ruhenden 3-Achsen-Koordinatensystem in das drehende 2-Achsen-Koordinatensystem (Park-Transformation) durchgeführt und aus dem Gesamtstrom iG eine Längsstromkomponente und eine Querstromkomponente ermittelt wird. In entsprechender Weise wird aus einer in Richtung des Netzes 3 vor dem Verbindungspunkt 9 liegende Stelle die Statorspannung US gemessen und in der Einrichtung 14 in je eine Längs- und Querkomponente umgewandelt. Aus den so erhaltenen Strom- und Spannungskomponenten oder auch auf irgendeine andere zweckmäßige Weise werden die vom Asynchrongenerator abgegebenen Wirk- und Blindleistungen Pist und Qist errechnet und an Ausgängen 14a und 14b der Einrichtung 14 bereit gestellt.

Der Wert Pist wird einem Baustein 15 zugeführt, in dem anhand einer Tabelle od. dgl. die zu dem Asynchrongenerator gehörende P/n-Kennlinien gespeichert sind, die die Abhängigkeit der abgegebenen Wirkleistung P von der Drehzahl n anzeigen, mit welcher die Welle 10 und damit der Läufer 1b angetrieben werden. Eine Aufgabe dieses Bausteins 15 besteht insbesondere in einer kontinuierlichen Anpassung der aktuellen Rotordrehzahl des Generators 1 an die jeweiligen Windverhältnisse. Windkraftanlagen sind normalerweise für eine bestimmte Nenn-Windgeschwindigkeit und eine dieser zugeordnete Nenn-Drehzahl ausgelegt. Abweichungen von der Nenn-Windgeschwindigkeit haben daher einen Leistungsabfall zur Folge, selbst wenn die Nenn-Drehzahl beibehalten würde. Allerdings ist bekannt, daß zu jeder Windgeschwindigkeit eine P/n-Kennlinie gehört, die bei einer gegebenen Drehzahl ein Leistungsmaximum hat (S. Heier aao S. 98,99 und Bild 2.64). Dies wird regelungstechnisch wie folgt berücksichtigt:

Durch Vergleich der aktuellen Leistung Pist mit dem im Bauteil 15 abgelegten Kennlinienfeld wird zunächst die jeweils optimale Drehzahl nsoll ermittelt und an einem Ausgang des Bausteins 15 abgegeben. Die Einstellung dieser Drehzahl nsoll erfolgt dann beim Asynchrongenerator nach Fig. 1 mit Hilfe des rotorseitigen Umrichters 5. Bekanntlich setzt sich das Beschleunigungsmoment des Generators 1 für die zu bewegenden Massen (Turbine 12, Rotor 1b) aus einem mechanischen, durch die Windgeschwindigkeit und die Einstellung der Turbinenblätter erzeugten Antriebsmoment und einem elektrischen, vom eigentlichen Generator 1 erzeugten Widerstands-(gegen-)moment zusammen. Das Widerstandsmoment kann mit Hilfe des Umrichters 5 bzw. des von diesem dem Rotor 1b zugefügten Stroms iRM eingestellt werden, indem dieser nach Frequenz, Amplitude und Winkellage relativ zum Statorfeld geregelt wird. Dadurch ist es möglich, die mechanische Drehzahl nist des Rotors 1b so zu regeln, daß sie im wesentlichen dem vorgegebenen Sollwert nsoll entspricht.

Im Asynchrongenerator nach Fig. 1 wird zu diesem Zweck zunächst in einem Vergleicher 16 die z. B. an der Welle 10 abgenommene Ist-Drehzahl nist mit der vom Baustein 15 vorgegebenen Soll-Drehzahl nsoll verglichen. Das Differenzsignal Δn wird einer hier als Sollwertgeber 17 bezeichneten Einrichtung einer komplexen Regelvorrichtung zugeführt, deren genauer Aufbau für die Zwecke der Erfindung nicht relevant ist. In dem Sollwertgeber 17 werden die Eingangswerte Δn jeweils in Sollwerte iRMqsoll für die Querkomponente und iRMdsoll für die Längskomponente des Rotorstroms iRM umgerechnet und jeweils an einem Ausgang 17a und 17b ausgegeben.

Der Istwert des Rotorstroms iRM wird an einem zwischen dem Rotor 1a und dem maschinenseitigen Umrichter 5 gelegenen Verbindungspunkt 18 mit Hilfe einer hier als Istwertgeber bezeichneten Einrichtung gemessen. Diese bildet analog zur Einrichtung 14 durch Transformation eine Querkomponente iRMqist und eine Längsstromkomponente iRMdist, die beide an Ausgängen 19a und 19b abgegeben werden. Diese Werte werden in Vergleichern 20 und 21 mit vom Sollwertgeber 17 erzeugten Sollwerten iRMqsoll und iRMdsoll für die Quer- und Längskomponente des maschinenseitigen Rotorstroms iRM verglichen. Die Differenzen dieser Ströme werden einem Regler 22 zugeführt.

Während die Sollwerte iRMqsoll im Sollwertgeber 17 aus der Drehzahldifferenz Δn gebildet werden, werden die Werte iRMdsoll aus den von der Einrichtung 14 erzeugten Ist-Blindleistungen Qist und zugehörigen Sollwerten Qsoll berechnet, die in einem Vergleicher 23 verglichen und in Form eines Differenzsignals ΔQ ebenfalls dem Sollwertgeber 17 zugeführt werden. Die Differenzsignale ΔQ dienen in einer für die Erfindung nicht wesentlichen Weise zur Regelung der vom Asynchrongenerator benötigten bzw. bereit gestellten Blindleistung. Sie werden im Sollwertgeber 17 in entsprechende Werte iRMdsoll umgewandelt und an einem Ausgang 17b ausgegeben.

Im Regler 22 werden die von den Vergleichern 20 und 21 abgegebenen Differenzwerte für iRMq und iRMd in das ruhende Koordinatensystem zurücktransformiert, um drei zugehörige Phasenspannungen zu erhalten. Diese werden schließlich in an sich bekannter Weise einem PWM-Baustein 24 (PWM = Puls-Weiten-Modulation) zugeführt, dessen Ausgangssignale dem maschinenseitigen Umrichter 5 zugeleitet werden, um diesen entsprechend den Anforderungen zu regeln. Dadurch wird insbesondere der maschinenseitige Rotorstrom iRM so eingestellt, daß sich der Rotor 1b im wesentlichen mit der im Baustein 15 ermittelten Drehzahl nsoll dreht.

Regelungen entsprechend Fig. 1 sind im Bereich von Windkraftanlagen allgemein bekannt (S. Heier aao Seiten 324 bis 327 und Bild 5.20), so daß auf weitergehende Einzelheiten verzichtet werden kann. Abgesehen davon ist es im Prinzip gleichgültig, wie die Regelung der Rotordrehzahl und der Blindleistung tatsächlich vorgenommen wird. Fig. 1 stellt jedoch ein bevorzugtes Ausführungsbeispiel dar.

Bekannte Asynchrongeneratoren sind ferner mit Schalteinrichtungen versehen, die z.B. zwischen dem Rotor 1b und dem Verbindungspunkt 18 eingebaut werden und dazu dienen, den Rotor 1b beim Auftreten eines Kurzschlusses vollkommen vom Umrichter 5 zu entkoppeln. Demgegenüber sieht die Erfindung eine Schalteinrichtung 25 vor, die dazu geeignet ist, beim Auftreten eines Kurzschlusses lediglich den Sollwertgeber 17 vom übrigen Teil der Regelvorrichtung zu trennen und stattdessen den aktuell vorhandenen, maschinenseitigen Rotorstrom iRMist festzuhalten bzw. einzufrieren. Hierzu wird wie folgt vorgegangen:

Die Ausgänge 19a, 19b des Istwertgebers 19 sind mit einer Meßeinrichtung 26 verbunden, mittels derer die Ausgangswerte an den Ausgängen 19a, 19b kontinuierlich überwacht werden. Die Ermittlung eines Kurzschlusses kann beispielsweise über die Messung des Gesamtstroms iG oder dadurch erfolgen, daß netzspezifisch ausgeprägte Spannungsgradienten (z. B. dUS/dt) ermittelt oder die Netzimpedanz impulsweise kontrolliert wird.

An die Messeinrichtung 26 ist eine Speichereinrichtung 27 angeschlossen, die ihrerseits mit einer Ausgabevorrichtung 28 verbunden ist. Diese weist zwei Ausgänge 28a und 28b auf, wobei der Ausgang 28a der Querkomponente iRMq und der Ausgang 28b der Längskomponente iRMd des Stroms iRMist zugeordnet ist. Außerdem sind die drei Bausteine 26, 27 und 28 über eine Steuerleitung 29 mit einer Fehler- bzw. Kurzschlußerkennung 30 verbunden, mittels derer die im Netz 3 oder in der Leitung 2 fließenden Ströme überwacht werden. Überschreiten diese Ströme einen vorgegebenen Sollwert, dann gibt die Fehlererkennung 30 an ihrem Ausgang ein Fehlersignal auf die Steuerleitung 29. Dies hat zur Folge, daß die zu diesem Zeitpunkt von der Meßeinrichtung 26 erfaßten Werte iRMqist und iRMdist in die Speichereinrichtung 27 überführt und von dort aus als neue Sollwerte an die Ausgänge 28a und 28b der Ausgabevorrichtung 28 gelegt werden.

Wie Fig. 1 weiter zeigt, ist die Schalteinrichtung 25 mit zwei schematisch angedeuteten Schaltkontakten 25a und 25b versehen. Der Schaltkontakt 25a ist fest mit dem Vergleicher 20, der Schaltkontakt 25b fest mit dem Vergleicher 21 verbunden. Außerdem kann der Schaltkontakt 25a von einer Normalstellung a, in welche er mit dem Ausgang 17a des Sollwertgebers 17 verbunden ist, in eine Stellung b umgeschaltet werden, in welcher er mit dem Ausgang 28a der Ausgabevorrichtung 28 verbunden ist. Entsprechend kann der Schaltkontakt 25b aus einer Stellung a, in der er mit dem Ausgang 17b verbunden ist, in eine Stellung b umgeschaltet werden, in der er mit dem Ausgang 28b verbunden ist.

Die Schalteinrichtung 25 ist schließlich über eine Leitung 31 auch mit der Steuerleitung 29 verbunden. Das hat zur Folge, daß die Schaltkontakte 25a und 25b, die sich während des normalen Betriebs der Windkraftanlage in der Normalstellung a befinden, beim Auftreten eines Kurzschlusses sofort in die Stellung b umgeschaltet werden. Dadurch ist der Regler 22 nach dieser Umschaltung vom Sollwertgeber 17 abgekoppelt mit der Folge, daß die Regelung jetzt anhand der an den Ausgängen 28a und 28b erscheinenden Sollwerte erfolgt, die den beim Auftreten des Kurzschlusses gerade vorhandenen Werten iRMqist und iRMdist entsprechen. Das bedeutet, daß der maschinenseitige Rotorstrom iRM im weiteren Verlauf seinen im Moment des Kurzschlusses vorhandenen Wert beibehält d. h. dieser Wert "eingefroren" wird.

Durch die Erfindung wird somit einerseits sichergestellt, daß der rotorseitige Umrichter 5 trotz eines Kurzschlusses im wesentlichen nur mit einem auch beim normalen Betrieb auftretenden Strom belastet wird und daher seine sensiblen Bauelemente nicht beschädigt werden. Andererseits kann der Statorstrom zumindest über so viele Perioden der Netzspannung auf einen z. B. 5- bis 15-fachen Wert ansteigen, der zur sicheren Auslösung aller im Netz 3 vorhandenen Schutzeinrichtungen führt, daß die mit diesem verbundenen Geräte und Vorrichtungen ebenfalls keinen Schaden nehmen können.

Der beschriebene Zustand kann somit für eine so große Zeitspanne (z. B. 2 Perioden der Netzspannung) aufrecht erhalten werden, wie für das Auslösen der Schutzeinrichtungen erforderlich ist. Danach kann die Windkraftanlage auf übliche Weise heruntergefahren oder, sobald die Quelle des Kurzschlusses beseitigt ist, mit der in den Stellungen a befindlichen Schalteinrichtung 25 weiter betrieben werden.

Der netzseitige Umrichter 6 kann analog zum Umrichter 5 durch eine PWM-Steuerung 33 gesteuert werden, die ihrerseits am Ausgang eines Reglers 34 liegt. Dem Regler 34 wird als Eingangssignal die von einem Vergleicher 35 ermittelte Differenz zwischen einem Sollwert iRNsoll und einem Istwert iRNist zugeführt, der an einem zwischen dem Umrichter 6 und dem Transformator 7 liegenden Verbindungspunkt 36 gemessen wird. Soll auch der Umrichter 6 vor Kurzschlußströmen geschützt werden, wird analog zur beschriebenen Regelung des Umrichters 5 wie folgt vorgegangen:

Es wird zunächst eine Meßeinrichtung 37 mit dem Verbindungspunkt 36 verbunden, mittels derer der zwischem dem Umrichter 6 und dem Transformator 7 fließende, netzseitige Rotorstrom iRN kontinuierlich überwacht wird. An die Meßeinrichtung 37 ist eine Speichereinrichtung 38 angeschlossen, die ihrerseits mit einer Ausgabevorrichtung 39 verbunden ist. Diese weist einen Ausgang auf, der einen dem aktuellen Istwert des Umrichterstroms entsprechenden Wert iRNist abgibt. Außerdem sind die drei Bausteine 37, 38 und 39 über die Steuerleitung 29 mit der Fehlererkennung 30 verbunden. Schließlich ist der Ausgang der Vorrichtung 39 mit einer Schalteinrichtung 40 verbunden, die einen Schaltkontakt 40a besitzt und unter der Steuerung der Fehlererkennung 30 steht. Dieser Schaltkontakt 40a ist einerseits fest mit einem Eingang des Vergleichers 35 verbunden und kann andererseits zwischen einer Stellung a, in der er mit einem Anschluß 41 für den Wert iRNsoll verbunden ist, in eine Stellung b umgeschaltet werden, in der er mit dem Ausgang der Ausgabevorrichtung 39 verbunden ist.

Im übrigen versteht sich, daß die Schalteinrichtung 40 wie auch die Schalteinrichtung 25 vorzugsweise aus elektronischen, über die Steuersignale in der Steuerleitung 29 unmittelbar steuerbaren Schaltelementen aufgebaut ist.

Die beschriebene Anordnung hat zur Folge, daß beim Auftreten eines Kurzschlusses die Schalteinrichtung 40 von der Stellung a auf die Stellung b umgeschaltet und dadurch der aktuelle Strom iRNist durch den Verbindungspunkt 36 als neuer Sollwert dem Vergleicher 35 zugeführt wird, wodurch der Strom durch den Umrichter 6 auf den beim Auftreten eines Kurzschlusses gerade vorhandenen Wert eingefroren wird. Dadurch ist sichergestellt, daß auch der Umrichter 6 vor Kurzschlüssen geschützt wird.

Da die Kurzschlußleistung letztendlich über den maschinenseitigen Umrichter 5 beeinflußt wird, ist es gemäß weiteren Ausführungsbeispielen der Erfindung auf einfache Weise möglich, die Kurzschlußleistung an netzspezifische oder vom Betreiber der Windkraftanlage gewünschte Anforderungen anzupassen. Dies erfolgt im allgemeinsten Fall dadurch, daß die dem Regler 22 zugeführten Werte in Abhängigkeit vom Gesamtstrom iG oder der Gesamtleistung PG, QG des Generators 1 modifiziert werden.

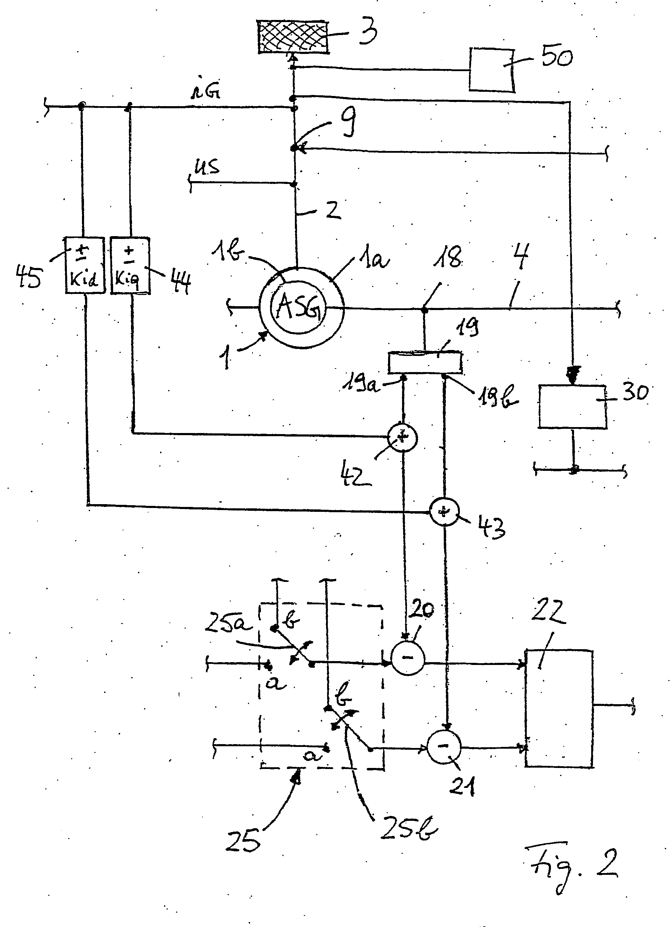

Fig. 2 zeigt ein Ausführungsbeispiel für eine Istwert-Korrektur. Gleiche Teile sind in Fig. ) 2 mit denselben Bezugszeichen wie in Fig. 1 versehen. Außerdem sind alle nicht zur Erläuterung der Korrektur benötigten Bauelemente in Fig. 2 weggelassen.

Die Istwert-Korrektur erfolgt gemäß Fig. 2 dadurch, daß in die Leitungen, die von den Ausgängen 19a, 19b des Istwertgebers 19 zu den entsprechenden Vergleichern 20, 21 führen, je ein Baustein 42, 43 eingebaut wird, der den aktuellen Istwert iRMqist bzw. iRMdist mit einem Korrekturwert ±kiq bzw. ±kid modifiziert und beispielsweise eine Summierstufe ist. Der Korrekturwert ±kiq bzw. ±kid wird z. B. in einer Multiplizierstufe 44, 45 gebildet, deren Eingängen der Gesamtstrom iG des Asynchrongenerators zugeführt wird und deren Ausgänge mit den Bausteinen 42, 43 verbunden sind. In den Multiplizierstufen 44, 45 wird der Gesamtstrom iG z.B. mit einem vorher eingestellten Faktor multipliziert, der kleiner oder größer als 1 und positiv oder negativ sein kann. Der dadurch erhaltene Korrekturwert kiq, kid wird dem jeweiligen Istwert iRMqist bzw. iRMdist hinzugefügt oder von diesem abgezogen. Entsprechend wird der Kurzschlußstrom, der sich im eingeforenen Zustand ausbildet und z.B. dem 5- bis 15-fachen des Nennstroms entsprechen kann, wahlweise vergrößert oder reduziert oder auf einen vorgewählten Maximalwert begrenzt.

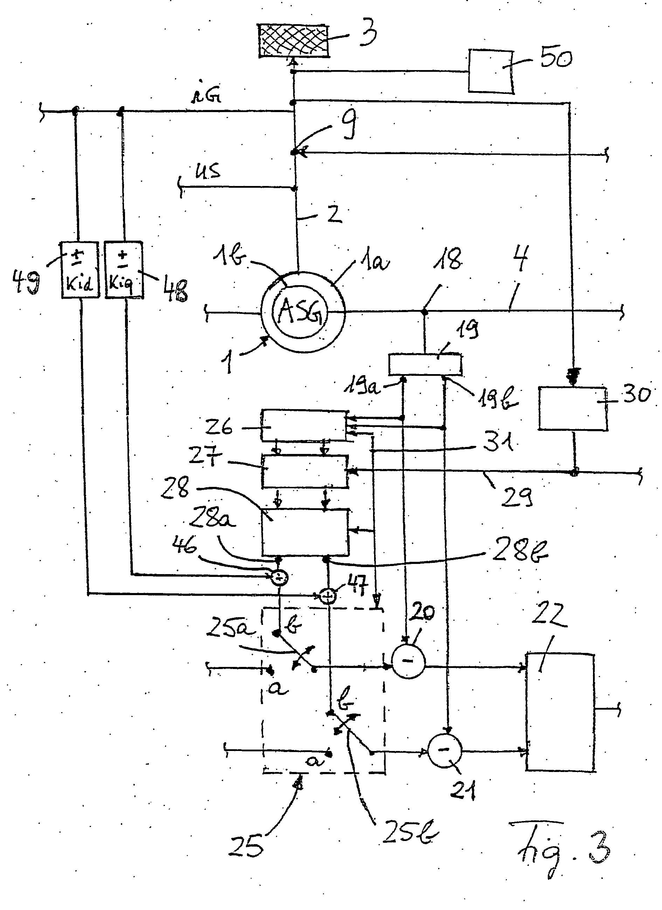

Fig. 3, in der analog zu Fig. 2 gleiche Teile mit denselben Bezugszeichen wie in Fig. 1 versehen sind, erfolgt die Modifikation des Kurzschlußstroms über eine Sollwertkorrektur. zu diesem Zweck werden hier Summierstufen 46, 47 in die zur Schalteinrichtung 25 führenden Ausgangsleitungen der Ausgabevorrichtung 28 gelegt. Analog zu Fig. 2 werden außerdem Multiplizierstufen 48, 49 vorgesehen, denen einerseits ein dem Gesamtstrom iG entsprechender Wert zugeführt wird und in denen andererseits dieser Wert iG mit einem vorgewählten Faktor multipliziert wird. Der dadurch erhaltene Wert wird den Summierstufen 46, 47 zugeführt, wodurch im Falle eines Kurzschlusses die eingefrorenen Werte iRMqist und iRMdist entsprechend modifiziert werden.

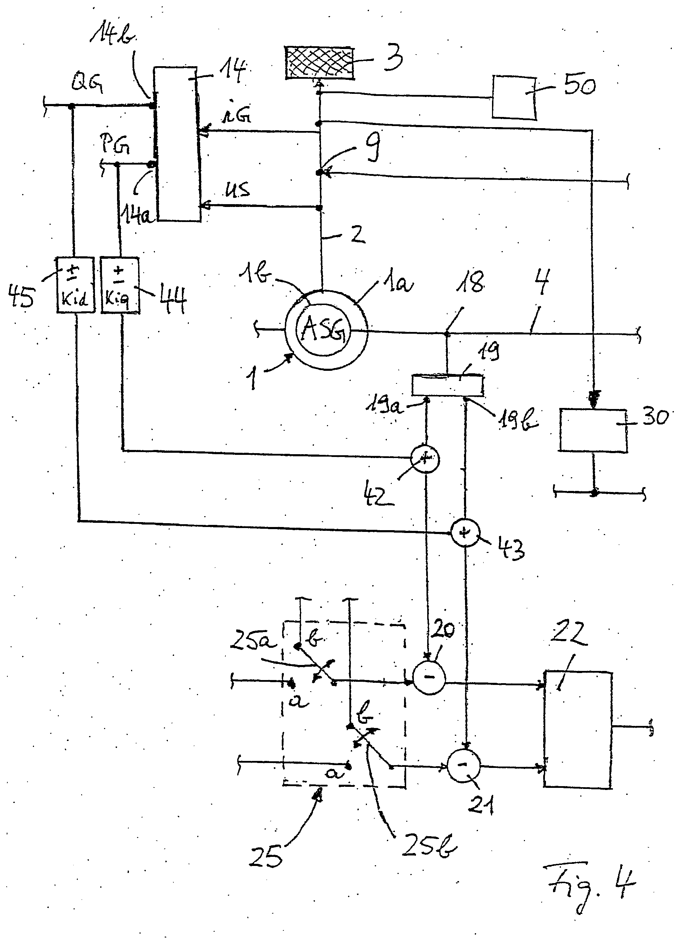

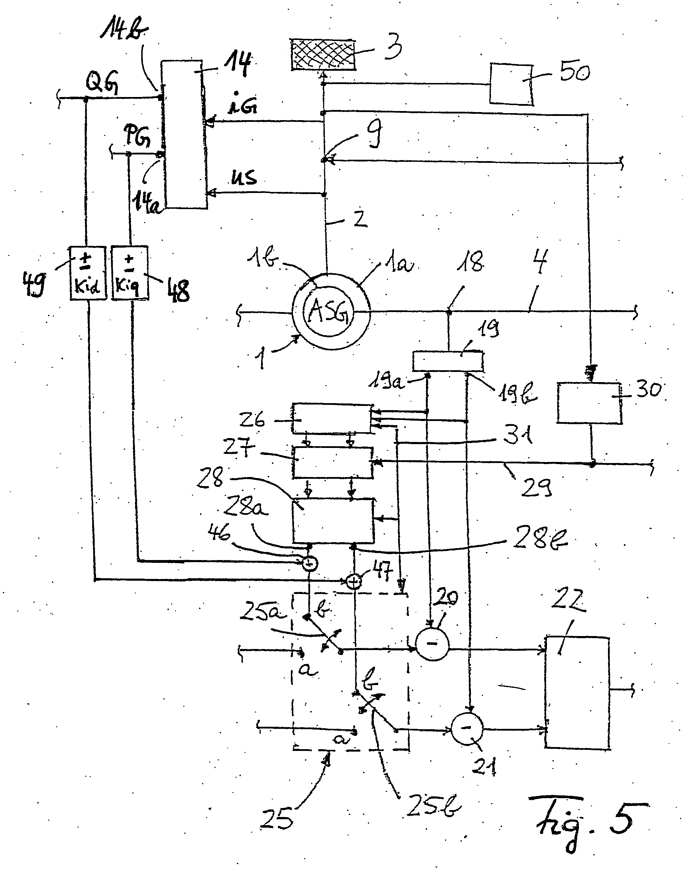

Die Beeinflussung des Kurzschlußstroms kann alternativ von der Generatorwirk- und/oder der Generatorblindleistung abhängig gemacht werden. Das ist schematisch in Fig. 4 und 5 gezeigt, die im übrigen den Fig. 2 und 3 entsprechen. Vorzugsweise wird die Querstromkomponente mit einem von der Wirkleistung Pist am Ausgang 14a abgeleiteten Korrekturwert, die Längsstromkomponente dagegen mit einem von der Blindleistung Qist am Ausgang 14b abgeleiteten Korrekturwert modifiziert.

Im übrigen sind die Summierstufen 42, 43, 46 und 47 zweckmäßig ebenfalls an die Steuerleitung 29 angeschlossen und so eingerichtet, daß sie nur dann, wenn ein Kurzschluß erkannt wird, aktiv werden.

Abgesehen davon ist klar, daß der zum Netz 3 führenden Leitung 2 zusätzlich ein Überstromschutz 50 zugeordnet werden kann, der beim Auftreten zu großer Kurzschlußströme aktiv wird und über eine Verstellung der Blattwinkel der Turbine 12 eine Strombegrenzung oder Abschaltung der Windkraftanlage herbeiführe

Die Erfindung ist nicht auf die beschriebenen Ausführungsbeispiele beschränkt, die auf vielfache Weise im Rahmen des augehängfen Patentansprüche abgewandelt werden können. Dies gilt insbesondere für die aus Fig. 1 ersichtiche Regelschaltung, die auf vielfache Weise verändert und den Bedürfnissen des Einzelfalls angepaßt werden kann, mit oder ohne Transformation der zu den drei Phasen gehörenden Ströme in ein drehendes Koordinatensystem. Allerdings ist dies bei dreiphasigen Netzen sinnvoll. Außerdem kann die Regelung digital oder analog und wahlweise mit Mitteln der Hard- und/oder Software realisiert werden. Weiter ist klar, daß das Einfrieren der im Fall eines Kurzschlusses vorhandenen Istwerte der Rotorströme auch auf eine andere als die beschriebene Weise vorgenommen werden kann. Entsprechendes gilt für die beschriebene Modifizierung (Korrektur) der Ist- und Sollwerte. Weiter kann der beschriebene, doppelt gespeiste Asynchrongenerator auch in Verbindung mit anderen Antrieben anstelle des aus Fig. 1 ersichtlichen Antriebs betrieben werden.

## Patentansprüche

1. Verfahren zum Betreiben eines doppelt gespeisten Asynchrongenerators, der einen Stator (1a) und einen Schleifring-Rotor (1b) aufweist, enthaltend die folgenden Verfahrensschritte: Anschluß des Stators (1a) an ein Energieversorgungsnetz (3), mechanische Verbindung des Rotors (1b) mit einem Antrieb (11, 12), elektrische Ankopplung des Rotors (1b) über einen maschinenseitigen und einen netzseitigen Umrichter (5,6) an das Netz (3), Überwachung des Netzes (3) zur Erkennung von Kurzschlußströmen, Einspeisung eines feldorientierten Stroms in den Rotor (1b) mit einer Frequenz, die im wesentlichen der Differenz aus der elektrischen Netzfrequenz und einer mechanischen, aus der Antriebsdrehzahl abgeleiteten Frequenz entspricht, und Regelung zumindest des maschinenseitigen Rotorstroms dadurch, daß Istwerte (iRMist) des maschinenseitigen Rotorstroms (iRM) ermittelt und an Sollwerte angepaßt werden, die in Abhängigkeit von gewünschten Betriebsbedingungen ausgewählt werden, **dadurch gekennzeichnet, daß** bei der Erkennung von Kurzschlüssen im Netz (3) der aktuell vorhandene Istwert (iRMist) des maschinenseitigen Rotorstroms (iRM) erfaßt, festgehalten und anstelle der ausgewählten Sollwerte für die Regelung des maschinenseitigen Rotorstroms verwendet wird und dadurch der Stator (1a) Kurzschlußstrom in das Netz (3) liefert.

2. Verfahren nach Anspruch 1, **dadurch gekennzeichnet, daß** der maschinenseitige Rotorstrom (iRM) mit allen drei Phasen unter Bildung von Längs- und Querströmen (iRMq, iRMd) in ein rotierendes Koordinatensystem transformiert wird und das Festhalten des maschinenseitigen Rotorstroms (iRM) unter Anwendung des Querstroms (iRMq) erfolgt.

3. Verfahren nach Anspruch 1 oder 2, **dadurch gekennzeichnet, daß** auch der netzseitige Rotorstrom (iRN) im Falle eines Kurzschlusses dadurch geregelt wird, daß Istwerte (iRNist) des netzseitigen Rotorstroms (iRN) erfaßt, festgehalten und anstelle ausgewählter Sollwerte (iRNsoll) für die Regelung des netzseitigen Rotorstroms verwendet werden.

4. Verfahren nach einem der Ansprüche 1 bis 3, **dadurch gekennzeichnet, daß** die im Falle eines Kurzschlusses für die Regelung verwendeten, festgehaltene Istwerte mit Korrekturwerten (± kiq, ± kid) modifiziert werden, die vom Gesamtstrom (iG) des Generators (1) abgeleitet werden.

5. Verfahren nach einem der Ansprüche 1 bis 3, **dadurch gekennzeichnet, daß** die im Falle eines Kurzschlusses für die Regelung verwendeten, festgehaltenen Istwerte mit Korrekturwerten (± kiq, ± kid) modifiziert werden, die von der Gesamtleistung (PG, QG) des Generators (1) abgeleitet werden.

6. Verfahren nach einem der Ansprüche 1 bis 5, **dadurch gekennzeichnet, daß** der festgehaltene Zustand der Istwerte für eine vorgewählte Zeitlang aufrecht erhalten wird.

7. Doppelt gespeister Asynchrongenerator, enthaltend: einen direkt an ein Energieversorgungsnetz (3) anzuschließenden Stator (1a), einen mechanisch mit einem Antrieb (11, 12) und elektrisch über einen maschinenseitigen und einen netzseitigen Umrichter (5, 6) an das Netz (3) zu koppelnden Schleifring-Rotor (1b), ein mit einer Schalteinrichtung (25) verbundenes Mittel (30) zur Erkennung von Kurzschlußströmen im Netz (3) und eine Regelschaltung zur feldorientierten Regelung des rotorseitigen Umrichters (5) derart, daß der Rotor (1b) stets mit einem Strom gespeist wird, dessen Frequenz im Wesentlichen der Differenz aus der elektrischen Netzfrequenz und einer mechanischen, aus der Antriebsdrehzahl abgeleiteten Frequenz entspricht, wobei die Regelschaltung einen Istwertgeber (19) zur Abgabe von Istwerten (iRM) zumindest eines maschinenseitigen Rotorstroms und einen Sollwert-geber (17) zur Abgabe von in Abhängigkeit von gewünschten Betriebsbedingungen ausgewählten Sollwerten für den maschinenseitigen Rotorstrom (iRM) aufweist, **dadurch gekennzeichnet, daß** die Schalteinrichtung (25) so mit dem Sollwertgeber (17) und dem Istwertgeber (19) verbunden ist, daß beim Auftreten eines Kurzschlusses der Sollwertgeber (17) von der Regelschaltung getrennt und stattdessen der aktuell vorhandene Istwert des maschinenseitigen Rotorstroms (iRM) festgehalten und als neuer Sollwert verwendet wird und dadurch der Stator (1a) Kurzschlußstrom in das Netz (3) liefern kann.

8. Doppelt gespeister Asynchrongenerator, **dadurch gekennzeichnet, daß** er eine mit dem Istwertgeber (19) verbundene Meßeinrichtung (26) und eine an diese angeschlossene Ausgabevorrichtung (28) für im Falle eines Kurzschlusses ermittelte Istwerte des maschinenseitigen Rotorstroms aufweist und die Schalteinrichtung (25) zwischen dem Sollwertgeber (17) und der Ausgabevorrichtung (28) umschaltbar ist.

9. Doppelt gespeister Asynchrongenerator nach Anspruch 7 oder 8, **dadurch gekennzeichnet, daß** Ausgänge (19a, 19b) des Istwertgebers (19) mit Mitteln (42 bis 45) zur Modifizierung der Istwerte mit Korrekturwerten (± kiq, ± kid) verbunden sind.

10. Doppelt gespeister Asynchrongenerator nach einem der Ansprüche 7 oder 8, **dadurch gekennzeichnet, daß** Ausgänge (28a, 28b) der Ausgabevorrichtung (28) mit Mitteln (46 bis 49) zur Modifizierung der Sollwerte mit Korrekturwerten (± kiq, ± kid) verbunden sind.

11. Doppelt gespeister Asynchrongenerator nach einem der Ansprüche 7 bis 10, **dadurch gekennzeichnet, daß** er Bestandteil einer Windkraftanlage ist.

**Claims**

1. Method for operating a double-fed asynchronous generator, which has a stator (1a) and a slipring rotor (1b), including the following method steps: connecting the stator (1a) to a power supply system (3), mechanically connecting the rotor (1b) to a drive (11, 12), electrically coupling the rotor (1b) to the power supply system (3) via a machine-side and a system-side converter (5, 6), monitoring the power supply system (3) for identifying short-circuit currents, feeding a field-oriented current into the rotor (1b) at a frequency which corresponds substantially to the difference from the electrical system frequency and a mechanical frequency which is derived from the drive speed, and subjecting at least the machine-side rotor current to closed-loop control by virtue of the fact that actual values (iRMact) of the machine-side rotor current (iRM) are determined and matched to setpoint values, which are selected depending on desired operating conditions, **characterized in that** in the event of detection of short circuits in the power supply system (3), the actual value (iRMact) present at that time for the machine-side rotor current (iRM) is detected, held and used instead of the selected setpoint values for the closed-loop control of the machine-side rotor current, and as a result the stator (1a) supplies short-circuit current to the power supply system (3).

2. Method according to Claim 1, **characterized in that** the machine-side rotor current (iRM) with all three phases is transformed into a rotating coordinate system so as to form direct-axis currents and quadrature-axis currents (iRMq, iRMd), and the machine-side rotor current (iRM) is held using the quadrature-axis current (iRMq).

3. Method according to Claim 1 or 2, **characterized in that** the system-side rotor current (iRN) is also subjected to closed-loop control in the event of a short circuit by virtue of the fact that actual values (iRNact) of the system-side rotor current (iRN) are detected, held and used instead of selected setpoint values (iRNset) for the closed-loop control of the system-side rotor current.

4. Method according to one of Claims 1 to 3, **characterized in that** the held actual values used in the event of a short circuit for the closed-loop control are modified with correction values ($\pm$ kiq, $\pm$ kid), which are derived from the total current (iG) of the generator (1).

5. Method according to one of Claims 1 to 3, **characterized in that** the held actual values used in the event of a short circuit for the closed-loop control are modified with correction values ($\pm$ kiq, $\pm$ kid), which are derived from the total power (PG, QG) of the generator (1).

6. Method according to one of Claims 1 to 5, **characterized in that** the held state of the actual values is maintained for a preselected period of time.

7. Double-fed asynchronous generator, comprising: a stator (1a) to be connected directly to a power supply system (3), a slipring rotor (1b) to be coupled mechanically to a drive (11, 12) and electrically to the power supply system (3) via a machine-side and a system-side converter (5, 6), a means (30) for identifying short-circuit currents in the power supply system (3), said means being connected to a switching device (25), and a closed-loop control circuit for the field-oriented closed-loop control of the rotor-side converter (5) such that the rotor (1b) is always fed a current whose frequency substantially corresponds to the difference comprising the electrical system frequency and a mechanical frequency derived from the drive speed, the closed-loop control circuit having an actual value sensor (19) for emitting actual values (iRM) of at least one machine-side rotor current (iRM) and a setpoint value sensor (17) for emitting setpoint values selected depending on desired operating conditions for the machine-side rotor current (iRM), **characterized in that** the switching device (25) is connected to the setpoint value sensor (17) and the actual value sensor (19) in such a way that, in the event of the occurrence of a short circuit, the setpoint value sensor (17) is isolated from the closed-loop control circuit and, instead, the actual value for the machine-side rotor current (iRM) present at that time is held and is used as the new setpoint value, and as a result the stator (1a) can supply short-circuit current to the power supply system (3).

8. Double-fed asynchronous generator, **characterized in that** it has a measuring device (26), which is connected to the actual value sensor (19), and an output apparatus (28) connected to said measuring device for actual values for the machine-side rotor current which are determined in the event of a short circuit, and the switching device (25) can be switched over between the setpoint value sensor (17) and the output apparatus (28).

9. Double-fed asynchronous generator according to Claim 7 or 8, **characterized in that** outputs (19a, 19b) of the actual value sensor (19) are connected to means (42 to 45) for modifying the actual values with correction values ($\pm$ kiq, $\pm$ kid).

10. Double-fed asynchronous generator according to either of Claims 7 and 8, **characterized in that** outputs (28a, 28b) of the output apparatus (28) are connected to means (46 to 49) for modifying the setpoint values with correction values ($\pm$ kiq, $\pm$ kid).

11. Double-fed asynchronous generator according to one of Claims 7 to 10, **characterized in that** it is part of a wind power plant.

**Revendications**

1. Procédé pour faire fonctionner un générateur asynchrone à double alimentation qui présente un stator (1a) et un rotor à bagues de frottement (1b), comprenant les étapes de procédé suivantes: connexion du stator (1a) à un réseau d'alimentation en énergie (3), liaison mécanique du rotor (1 b) à un entraînement (11, 12), couplage électrique du rotor (1b) au réseau (3) au moyens de convertisseurs de fréquence côté machine et côté réseau (5, 6), surveillance du réseau (3) pour détecter des courants de court-circuit, injection dans le rotor (1 b) d'un courant orienté dans le sens du champ à une fréquence qui correspond sensiblement à la différence entre la fréquence électrique du réseau et une fréquence mécanique dérivée de la vitesse de rotation de l'entraînement, et régulation au moins du courant de rotor côté machine en déterminant des valeurs réelles (iRMist) du courant de rotor côté machine (iRM) et en les adaptant à des valeurs de consigne choisies en fonction de conditions de fonctionnement voulues, **caractérisé en ce que**, lorsque des courts-circuits sont détectés dans le réseau (3), la valeur réelle (iRMist) du courant de rotor côté machine (iRM) actuellement présente est déterminée, conservée et utilisée à la place des valeurs de consigne choisies pour la régulation du courant de rotor côté machine de sorte que le stator (1a) délivre un courant de court-circuit dans le réseau (3).

2.  Procédé selon la revendication 1, **caractérisé en ce que** le courant de rotor côté machine (iRM) avec l'ensemble des trois phases est transformé en un référentiel tournant avec formation de courants longitudinaux et transversaux (iRMq, iRMd) et **en ce que** la conservation du courant de rotor côté machine (iRM) se fait en utilisant le courant transversal (iRMq).

3.  Procédé selon la revendication 1 ou la revendication 2, **caractérisé en ce que** le courant de rotor côté réseau (iRN) est également régulé en cas de court-circuit en déterminant des valeurs réelles (iRNist) du courant de rotor côté réseau (iRN), en les conservant et en les utilisant à la place de valeurs de consigne (iRNsoll) choisies pour la régulation du courant de rotor côté réseau.

4.  Procédé selon l'une des revendications 1 à 3, **caractérisé en ce que** les valeurs réelles conservées utilisées pour la régulation en cas de court-circuit sont modifiées avec des valeurs de correction ($\pm$ kiq, $\pm$ kid) dérivées du courant total (iG) du générateur (1).

5.  Procédé selon l'une des revendications 1 à 3, **caractérisé en ce que** les valeurs réelles conservées utilisées pour la régulation en cas de court-circuit sont modifiées avec des valeurs de correction ($\pm$ kiq, $\pm$ kid) dérivées de la puissance totale (PG, QG) du générateur (1).

6.  Procédé selon l'une des revendications 1 à 5, **caractérisé en ce que** l'état conservé des valeurs réelles est maintenu pendant une durée présélectionnée.

7.  Générateur asynchrone à double alimentation, contenant : un stator (1a) qui se connecte directement à un réseau d'alimentation en énergie (3), un rotor à bagues de frottement (1 b) qui se relie mécaniquement à un entraînement (11, 12) et se couple électriquement au réseau (3) au moyens de convertisseurs de fréquence côté machine et côté réseau (5, 6), un moyen (30) relié à un dispositif de commutation (25) pour détecter des courants de court-circuit dans le réseau (3), et un circuit de régulation pour réguler dans le sens du champ le convertisseur de fréquence côté rotor (5) de telle façon que le rotor (1 b) est alimenté en permanence par un courant dont la fréquence correspond sensiblement à la différence entre la fréquence électrique du réseau et une fréquence mécanique dérivée de la vitesse de rotation de l'entraînement, ledit circuit de régulation présentant un transmetteur de valeurs réelles (19) pour délivrer des valeurs réelles (iRM) au moins d'un courant de rotor côté machine (iRM) et un transmetteur de valeurs de consigne (17) pour délivrer des valeurs de consigne du courant de rotor côté machine (iRM) choisies en fonction de conditions de fonctionnement voulues, **caractérisé en ce que** le dispositif de commutation (25) est relié au transmetteur de valeurs de consigne (17) et au transmetteur de valeurs réelles (19) de telle façon que, lorsqu'un court-circuit se manifeste, le transmetteur de valeurs de consigne (17) est séparé du circuit de régulation et, à la place, la valeur réelle du courant de rotor côté machine (iRM) est conservée et utilisée comme nouvelle valeur de consigne de sorti que le stator (1a) puisse délivrer un courant de court-circuit dans le réseau (3).

8.  Générateur asynchrone à double alimentation, **caractérisé en ce qu'**il présente un dispositif de mesure (26) relié au transmetteur de valeurs réelles (19) et, relié à ce dispositif, un dispositif de sortie (28) pour délivrer les valeurs réelles du courant de rotor côté machine déterminées en cas de court-circuit, et **en ce que** le dispositif de commutation (25) peut basculer entre le transmetteur de valeurs de consigne (17) et le dispositif de sortie (28).

9.  Générateur asynchrone à double alimentation selon la revendication 7 ou la revendication 8, **caractérisé en ce que** des sorties (19a, 19b) du transmetteur de valeurs réelles (19) sont reliées à des moyens (42 à 45) permettant de modifier les valeurs réelles avec des valeurs de correction ($\pm$ kiq, $\pm$ kid).

10. Générateur asynchrone à double alimentation selon l'une des revendications 7 ou 8, **caractérisé en ce que** des sorties (28a, 28b) du dispositif de sortie (28) sont reliées à des moyens (46 à 49) permettant de modifier les valeurs de consigne avec des valeurs de correction ($\pm$ kiq, $\pm$ kid).

**11.** Générateur asynchrone à double alimentation selon l'une des revendications 7 à 10, **caractérisé en ce qu'**il fait partie d'une installation éolienne.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10119624 A1

**In der Beschreibung aufgeführte Nicht-Patentliteratur**

- Windkraftanlagen. B.G. Teubner-Verlag